# EUROPEAN PATENT SPECIFICATION

(11) **EP 2 718 248 B1**
(45) Date of publication and mention of the grant of the patent: **28.07.2021**
(21) Application number: 12796182.9
(22) Date of filing: 01.06.2012
(51) Int. Cl.: C05F 17/00, C05F 17/10, C05F 17/20, C05F 17/05

(54) **COMPOST MIXTURE AND A METHOD FOR COMPOSTING**
KOMPOSTMISCHUNG UND KOMPOSTIERUNGSVERFAHREN
MÉLANGE DE COMPOST ET PROCÉDÉ POUR COMPOSTAGE

(30) Priority: 07.06.2011 FI 20115548
(43) Date of publication of application: 16.04.2014
(73) Proprietor: Kiteen Mato Ja Multa Oy, 82500 Kitee (FI)
(72) Inventor: TURUNEN, Aimo, FI-82500 Kitee (FI); HOPPU, Pekka, FI-82500 Kitee (FI)
(74) Representative: Kolster Oy Ab
(86) International application number: PCT/FI2012/050545
(87) International publication number: WO 2012/168550

(56) References cited:
- EP-A2- 0 999 194
- WO-A1-00/53543
- WO-A1-97/10190
- WO-A2-2004/087617
- CN-A- 101 891 511
- DE-A1- 19 830 483
- RU-C1- 2 408 563
- DATABASE WPI Week 201121 Thomson Scientific, London, GB; AN 2011-A07004 XP002734936, & CN 101 891 511 A (LI X) 24 November 2010 (2010-11-24)
- None

## Description

### Background

The invention relates to a compost mixture according to claim 1.

Further, the invention relates to a method for composting according to claim 5.

The purpose of composting is to accelerate decomposition of organic matter into a substrate by means of micro-organisms, such as fungi, bacteria, actinomycetes and worms. The composition of the material to be composted, i.e. of the compost mixture, the nature and proportions of the compounds in it, and the temperature and moisture content of the compost are very important factors for successful composting.

The compost mixture must bind a given amount of water in order for appropriate processes to take place in the compost. As is well known, peat is used for binding water. A problem here is that peat is renewed very slowly. Thus, the use of peat in the compost mixture is neither reasonable for environmental reasons nor in conformity with the principles of sustainable development

Documents CN 101 891 511 (WPI abstract), EP 0999194 and WO 00/53543 describe mixtures comprising worm waste.

### Brief description

The compost mixture and method disclosed in this description are characterised by what is stated in the independent claims. Some preferred embodiments are disclosed in the dependent claims.

The compost mixture presented here is based on using broken dry matter instead of peat for binding water.

An advantage of the compost mixture is that its composition is environmentally friendly and that the ecological carbon footprint of the product obtained from it is extremely small. A further advantage is that there is no need to add any artificial additives, such as fertilizers, to the product because nitrogen, trace elements and other nutrients in it are mainly generated by faeces of worms.

The idea of an embodiment of the method is that the temperature of the compost is kept at a temperature of less than 25 °C, for example at 0 to 23 °C, preferably at 5 to 15 °C. The advantage here is that the amount of ammonia, carbon dioxide and nutrients, for instance compounds of nitrogen, released into the atmosphere can be reduced, which means that the product obtained from the compost mixture is rich in nutrients, and the method does not harm the atmosphere. Furthermore, the low processing temperature does not destroy the structure of the crushed plant fibre, whereby the water retaining capacity remains good after the processing.

### Brief description

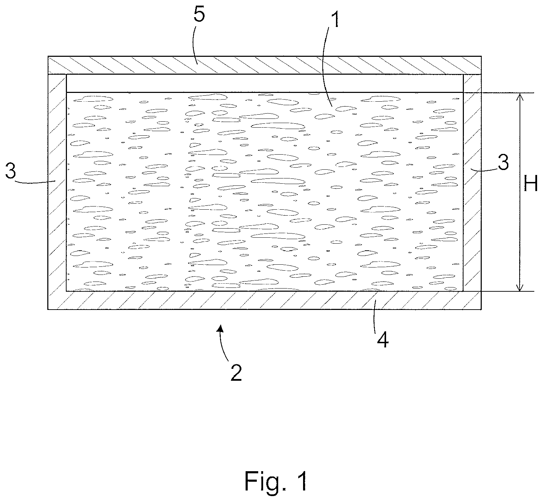

Some embodiments of the solution are described in greater detail in Figure 1, which shows a cross-sectional view of a compost mixture according to the invention, arranged in composting equipment. Detailed description

Figure 1 shows a cross-sectional view of a compost mixture according to the invention, arranged in composting equipment.

A compost mixture 1 comprises the following mixture components:
a) 1 to 30% by volume of organic nitrogenous material comprising completely or partially organic waste, the organic nitrogenous material comprises green matter, such as turf or other green plant material, sediment, biowaste, or manure,
b) 60 to 90% by volume of broken dry matter, the broken dry matter comprising stalk-like material, the stalk-like material comprises common reed, reedcanary grass, common club-rush, maritime club-rush, or straw,
c) 5 to 15% by volume of decomposing material that decomposes organic material, the decomposing material comprising mycocelial filaments and/or enzyme,
d) 1 to 5% by volume of fine rock materia, the dominant grain size of the fine rock material being 0.002 to 2 mm, and
e) 1 to 30% by volume of worms and/or worm faeces.

All solid mixture components may preferably be crushed before they are mixed into the compost mixture but crushing is not necessary.

The organic nitrogenous material may be either completely or partially organic waste, comprising green matter, for instance turf or other
green plant material, sediment, such as ground sediment from a water system, manure and/or biowaste, for instance biowaste generated by heat composting, or digestion residues from a biogas plant.

Broken dry matter refers, in this description, to cut, chipped and/or crushed organic material

The broken dry matter comprises stalk-like material, the stalk-like material comprises common reed, reed canary grass common club-rush, maritime club-rush, or straw.

Broken dry matter may further comprise dead material, such as wood chips, tor example hardwood chips, bark, hay, or the like, or a mixture ot these.

The length of stalk-like mixture components may be about 0 to 50 mm, for example 0 to 20 mm or even 300 mm. Typically, longer stalks slow down the composting process, so the composting speed can be controlled by means of the stalk length. Water retaining capacity can be increased by using a smaller particle size. Stalk-like mixture components decompose slowly, which means that the substrate retains its form during use for several growing seasons. The composting time may be three months to two years, for instance.

Ground and crushed stalk-like mixture components guarantee an excellent water retaining capacity for the substrate, compared with conventional compost material or a substrate generated by worms. The substrate binds a very large amount of water to itself: according to one embodiment, 1 litre (about 100 g) of generated substrate binds about 500 g of water to itself. Then, the water retaining capacity of the product substrate corresponds to the water retaining capacity of peat but in fact the product is completely peat-free and thus exceptional.

The diameter of wood chips may be 0 to 5 mm, for instance, or even 20 mm. The wood chips may be untreated or treated with enzymes, for example lignin in the chips may be broken down enzymatically before it is mixed into the compost mixture.

Decomposing material that decomposes organic material may comprise mycocelial filaments, enzyme generated by fungi or another enzyme, decomposing bacteria etc. The decomposing material may also be of substrate produced earlier of the compost mixture disclosed in this description. The decomposing material may be, for instance, decomposing material or filaments of shiitake, or decomposing mass or filaments of mycorrhiza fungi.

Decomposing material significantly accelerates the composting process. Further, it may also be used for composting resinous wood, bark or leaves of eucalyptus trees, peanut shells or the like materials that do not decompose easily.

Fine rock material comprises sand, fine sand and/or silt, whereby its dominant grain size is typically 0.002 to 2 mm. Fine rock material contributes to the working of worms' digestive system because it serves as a grindstone in their intestines. Further, plants often need sand to which they can bind their roots, which improves the structure and quality of the substrate.

Worms loosen the compost mixture 1 and decompose organic material in it through their metabolism. As regards their species, the worms may be any biodegrading worms.

The proportion of worms to worm faeces typically changes as the composting is progressing. At the beginning, the proportion of worms may be higher, even 100% of the total volume of the worms and worm faeces. In the composted mass to be removed from the compost, the proportion of worms may be lower than that of worm faeces.

The compost mixture 1 may naturally also contain other mixture components. Further, the compost mixture 1 contains a suitable amount of moisture, i.e. water, which may get to the compost mixture 1 for instance along with organic nitrogenous material, or in another manner. The moisture content of the compost mixture 1 may be, for example, 30 to 90% by volume, depending on the moisture required by the worms, for example.

The pH of the compost mixture and the worm soil generated of it can, if required, be adjusted by liming or using ashes in the amount of 0 to 10%.

The temperature of the compost mixture 1 is, during composting, less than 25 °C, preferably about 0 to 23 °C. Composting taking place within this temperature range is, in this description, called cold composting. Even more preferably, the temperature is 5 to 15 °C.

In cold composting, the activity of worms is typically at its highest, which accelerates composting and generation of worm faeces. In composting taking place at temperatures of over 25 °C, i.e. in heat composting, ammonia and carbon dioxide are released into the atmosphere, whereby nutrients contained in the composting mixture 1 are lost and the atmosphere is harmed.

Also described is that the compost mixture 1 is arranged in composting equipment 2. The compost equipment may comprise a wall structure 3, a bottom structure 4 and a lid structure 5, which form a closed, appropriately breathable structure around the compost mixture 1.

The thickness H of the compost mixture layer is preferably 3 to 30 cm, but it may also be significantly greater than that, even 300 cm, for instance. The thinner the layer, the easier it is to achieve efficient aeration for the compost mixture 1 and the smaller the risk of the compost mixture 1 heating up too much. The temperature can be adjusted by, for example, controlling the proportion of green matter, mixing the compost mixture 1, using elements that shade the compost equipment, such as shading fabric, and controlling the moisture of the compost mixture 1.

The compost equipment 2 may naturally be of another type. Composting does not necessarily have to take place in a closed space, so the compost equipment 2 may be implemented without the lid structure 5 and/or wall structure 3, for example. However, the compost mixture 1 is preferably positioned in such a way that rain, for instance, cannot dissolve its nutrients.

The composting equipment 2 may be batch-operated, in other words a given batch of compost mixture 1 is arranged in it and allowed to be composted, being removed at least substantially completely from the composting equipment 2 when the composting has finished, before the next batch of compost mixture is added.

The composting equipment 2 may also be continuously operated, in which case some compost mixture 1 is added to it although the batch of compost mixture added earlier has not been removed from the composting equipment 2, at least not completely.

The bottom structure 4 of the composting equipment may comprise a belt travelling at a given speed. Such a solution is particularly usable in connection with continuously operated composting equipment.

Nitrogen, trace elements and nutrients of the product obtained from the compost mixture 1, such as a substrate, are mainly generated by worm faeces, in addition to which the worm faeces contains soil-decomposing enzymes. The product does not contain artificial fertilizers. The activity of the enzymes and micro-organisms in the product increase the well-being of plants.

The product is completely peat-free but it behaves in culture tests in the same way as peat-based substrates, particularly with regard to their water retaining capacity, because crushed, stalk-like material guarantees a good structure and water retaining capacity for the substrate. The looseness of the structure guarantees good oxygen supply for plant roots.

## Claims

1. A compost mixture, comprising
- 1 to 30% by volume of organic nitrogenous material comprising completely or partially organic waste, the organic nitrogenous material comprises green matter, such as turf or other green plant material, sediment, biowaste, or manure,
- broken dry matter,
- decomposing material that decomposes organic material, the decomposing material comprising mycocelial filaments and/or enzyme, and
- 1 to 30% by volume of worms and/or worm faeces, **characterized in that**
- the volume of the broken dry matter is 60 to 90%, the broken dry matter comprising stalk-like material, the stalk-like material comprises common reed, reed canary grass, common club-rush, maritime club-rush, or straw,
- the volume of the decomposing material is 5 to 15%, and that the compost mixture further comprises
- 1 to 5% by volume of fine rock material, the dominant grain size of the fine rock material being 0.002 to 2 mm.

2. A compost mixture according claim 1, **characterized in that** the mycocelial filaments comprise shiitake filaments.

3. A compost mixture according to claim 1 or 2, **characterized in that** it comprises, at most, about 10% by volume of adjusting material that adjusts the pH.

4. A compost mixture according to claim 3, **characterized in that** the adjusting material comprises lime and/or ashes.

5. A method for composting, **characterized by** using a compost mixture according to claim 1.

6. A method according to claim 5, **characterized by** keeping the temperature of the compost within a range of 0 to 25 °C.

## Patentansprüche

1. Kompostmischung umfassend:
- 1 bis 30 Vol.-% organisches Stickstoffmaterial, das ganz oder teilweise organische Abfälle enthält, wobei das organische Stickstoffmaterial aus Grünmasse wie Rasen oder anderem Grünplanzenmaterial, Sediment, Bioabfall oder Dung besteht,
- aufgebrochene Trockenmasse,
- zersetzendes Material, das organisches Material zersetzt, wobei das zersetzende Material Myzelfäden und/oder Enzyme enthält, und
- 1 bis 30 Vol.-% Würmer und/oder Wurmkot,
**dadurch gekennzeichnet, dass**
- das Volumen der aufgebrochenen Trockenmasse 60 bis 90 % beträgt, wobei die aufgebrochene Trockenmasse stielartiges Material enthält, wobei das stielartige Material Schilfrohr, Schilfgras, Gewöhnliche Teichbinse, Salz-Teichbinse oder Stroh umfasst,
- das Volumen des zersetzenden Materials 5 bis 15 % beträgt, und die Kompostmischung weiter umfasst:
- 1 bis 5 Vol.-% feinkörniges Gesteinsmaterial, wobei die vorherrschende Korngröße des feinkörnigen Gesteinsmaterials 0,002 bis 2 mm beträgt.

2. Kompostmischung nach Anspruch 1,
**dadurch gekennzeichnet, dass** die Myzelfäden Shiitake-Fäden umfassen.

3. Kompostmischung nach Anspruch 1 oder 2,
**dadurch gekennzeichnet, dass** sie höchstens etwa 10 Vol.-% Einstellmaterial umfasst, das den pH-Wert einstellt.

4. Kompostmischung nach Anspruch 3, **dadurch gekennzeichnet, dass** das Einstellmaterial Kalk und/oder Asche umfasst.

5. Verfahren zur Kompostierung,
**gekennzeichnet durch** die Verwendung einer Kompostmischung nach Anspruch 1.

6. Verfahren nach Anspruch 5,
**gekennzeichnet durch** das Halten der Temperatur des Kompostes in einem Bereich von 0 bis 25 °C.

## Revendications

1. Mélange de compost comprenant
- 1 à 30 % en volume de matériau azoté organique comprenant des déchets complètement ou partiellement organiques, le matériau azoté organique comprend des matières vertes, telles que le gazon ou d'autres matières végétales vertes, des sédiments, des biodéchets, ou du fumier,
- des matières sèches fragmentées,
- un matériau de décomposition qui décompose les matériaux organiques, le matériau de décomposition comprenant des filaments mycéliens et/ou une enzyme, et
- 1 à 30 % en volume de vers et/ou de fèces de vers, **caractérisé en ce que**
- le volume des matières sèches fragmentées est de 60 à 90 %, les matières sèches fragmentées comprennent un matériau de type rafle, le matériau de type rafle comprend du roseau commun, de la phalaride, du jonc des chaisiers, du jonc marin, ou de la paille,
- le volume du matériau de décomposition est de 5 à 15 %, et **en ce que** le mélange de compost comprend en outre
- 1 à 5 % en volume de matériau rocheux fin, la granulométrie dominante du matériau rocheux fin étant de 0,002 à 2 mm.

2. Mélange de compost selon la revendication 1, **caractérisé en ce que** les filaments mycéliens comprennent des filaments de shiitake.

3. Mélange de compost selon la revendication 1 ou 2, **caractérisé en ce qu'**il comprend au plus environ 10 % en volume de matériau d'ajustement qui ajuste le pH.

4. Mélange de compost selon la revendication 3, **caractérisé en ce que** le matériau d'ajustement comprend de la chaux et/ou des cendres.

5. Procédé de compostage, **caractérisé par** l'utilisation d'un mélange de compost selon la revendication 1.

6. Procédé selon la revendication 5, **caractérisé par** le maintien de la température du compost dans la plage allant de 0 à 25°C.
